# EUROPEAN PATENT APPLICATION

(11) **EP 4 645 591 A1**
(43) Date of publication of application: **05.11.2025**
(21) Application number: 24753500.8
(22) Date of filing: 22.01.2024
(51) Int. Cl.: H01Q 1/24, H04M 1/02

(54) **ELECTRONIC DEVICE COMPRISING LATERAL ANTENNA STRUCTURE**

(30) Priority: 09.02.2023 KR 20230017434; 07.04.2023 KR 20230046217
(71) Applicant: Samsung Electronics Co., Ltd., Suwon-si, Gyeonggi-do 16677 (KR)
(72) Inventor: KIM, Gidae, Suwon-si, Gyeonggi-do 16677 (KR)
(74) Representative: HGF
(86) International application number: PCT/KR2024/001025
(87) International publication number: WO 2024/167168

(57) **Abstract**

According to an embodiment of the present disclosure, an electronic device comprises: a housing; a frame which is at least partially formed of a conductive material, surrounds a side of the housing, and includes an insertion hole; a circuit member including a substrate, a connection member extending from the substrate and connected to a communication module of the electronic device, and a switch disposed on the housing and facing the insertion hole of the frame; a contact portion formed of a conductive material and disposed on the substrate of the circuit member to be in contact with the frame; and an opening disposed between the housing and the frame and including a first section located in a first direction with respect to the contact portion and a second section located in a second direction opposite to the first direction, with respect to the contact portion, wherein the frame may include a first portion corresponding to the first section of the opening and a second portion which corresponds to the second section of the opening and transmits or receives a communication signal.

## Description

### [Technical Field]

Various embodiments disclosed herein relate to an electronic device including a side antenna structure.

### [Background Art]

Due to the design trend of electronic devices, demand for electronic devices with a metal for appearance is increasing.

In the case of an electronic device having a frame made of metal as an exterior, disposing an antenna inside the frame may be limited. In order to overcome this, a method of implementing an antenna and securing radiation performance by utilizing at least a portion of a metal frame as a radiator of the antenna has been applied.

Meanwhile, as 5G service starts, additional service bands may be added. For this reason, electronic devices include a larger number of antenna radiators than before.

### [Disclosure of Invention]

### [Technical Problem]

An electronic device may be provided with an antenna configured to transmit or receive a signal to or from an external electronic device. The electronic device may utilize a frame positioned on a side surface of the electronic device as an antenna. In such a case, the frame may be electrically connected to a communication module disposed on a printed circuit board. In an embodiment, the frame may be electrically connected to the communication module disposed on the printed circuit board through contact with a contact portion (e.g., a c-clip) disposed on the printed circuit board.

Meanwhile, as performance improvements are required for the electronic device, various electronic components may be disposed inside the electronic device. In such a case, the space occupied by the electronic components may increase, restricting the available space for utilizing the frame as an antenna.

### [Solution to Problem]

According to an embodiment of the disclosure, an electronic device may include a housing, a frame at least partially made of a conductive material, surrounding a side surface of the housing, and including an insertion hole, a circuit member including a substrate, a connection member extending from the substrate and connected to a communication module of the electronic device, and a switch disposed in the housing and facing the insertion hole of the frame, a contact portion made of a conductive material and disposed on the substrate of the circuit member and in contact with the frame, and an opening positioned between the housing and the frame and including a first section positioned in a first direction with respect to the contact portion, and a second section positioned in a second direction opposite to the first direction with respect to the contact portion. The frame may include a first portion corresponding to the first section of the opening, and a second portion corresponding to the second section of the opening and configured to transmit or receive a communication signal.

An embodiment of the disclosure provide a circuit member disposed in an opening defined between a housing and a frame, which is at least partially made of a conductive material, surrounds a side surface of the housing, and includes an insertion hole. The circuit member may include a substrate, a connection member extending from the substrate and connected to a communication module of the electronic device, a switch disposed in the housing and facing the insertion hole of the frame, and a contact portion made of a conductive material and disposed on the substrate of the circuit member and in contact with the frame. The opening may include a first section positioned in a first direction with respect to the contact portion, and a second section positioned in a second direction opposite to the first direction with respect to the contact portion. The frame may include a first portion corresponding to the first section of the opening, and a second portion corresponding to the second section of the opening and configured to transmit or receive a communication signal.

### [Advantageous Effects of Invention]

According to an embodiment of the disclosure, a structure in which a frame of an electronic device operates as an antenna by utilizing a side space of the electronic device may be proposed.

### [Brief Description of Drawings]

In connection with the description of the drawings, the same or similar components may be denoted by the same or similar reference numerals.
FIG. 1 is a block diagram of an electronic device according to various embodiments in a network environment.
FIG. 2 is a block diagram of an electronic device configured to support legacy network communication and 5G network communication according to various embodiments of the disclosure.
FIG. 3A is a front perspective view of an electronic device according to various embodiments of the disclosure.
FIG. 3B is a rear perspective view illustrating the electronic device of FIG. 3A according to various embodiments of the disclosure.
FIG. 4 is an exploded perspective view illustrating the electronic device of FIG. 3A according to various embodiments of the disclosure.
FIG. 5A is a perspective view illustrating a coupling relationship between button members and insertion holes provided in a frame according to an embodiment of the disclosure.
FIGS. 5B and 5C are views illustrating a housing and a frame according to an embodiment of the disclosure.
FIG. 6 is a front view of a key input device according to an embodiment of the disclosure.
FIG. 7 is a cross-sectional view taken along line A-A illustrated in FIG. 5C.
FIG. 8A is a view illustrating a state in which a contact portion of a key input device is in contact with the frame in a state in which the frame and the side surface member are coupled, according to an embodiment of the disclosure.
FIG. 8B is a view illustrating a first section and a second section of an opening defined between the frame and the housing, according to an embodiment of the disclosure.
FIG. 8C is a view illustrating a first section, a (2-1)^{th} section, and a (2-2)^{th} section of the opening defined between the frame and the housing, according to an embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

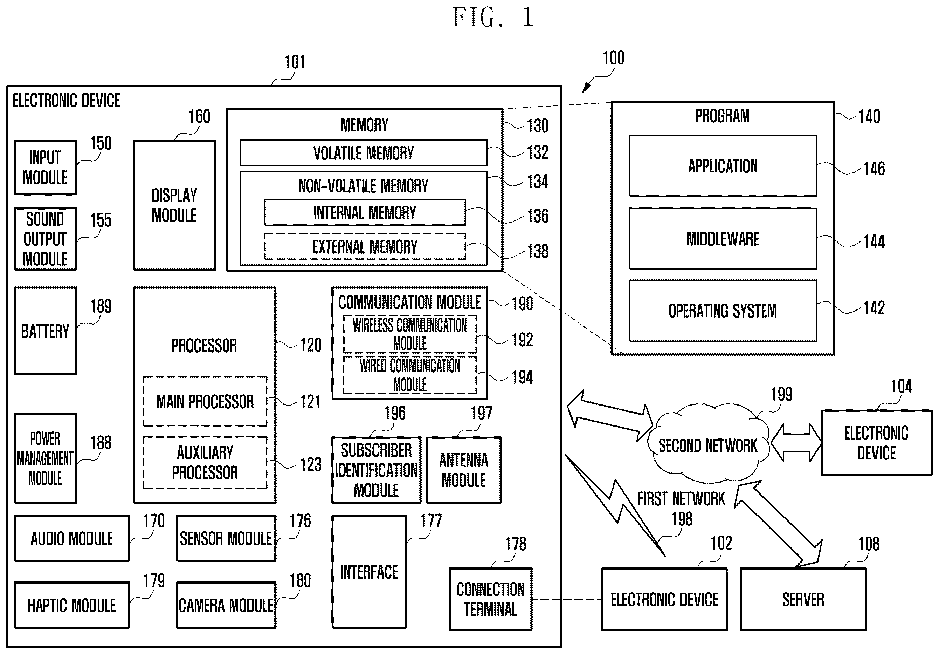

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

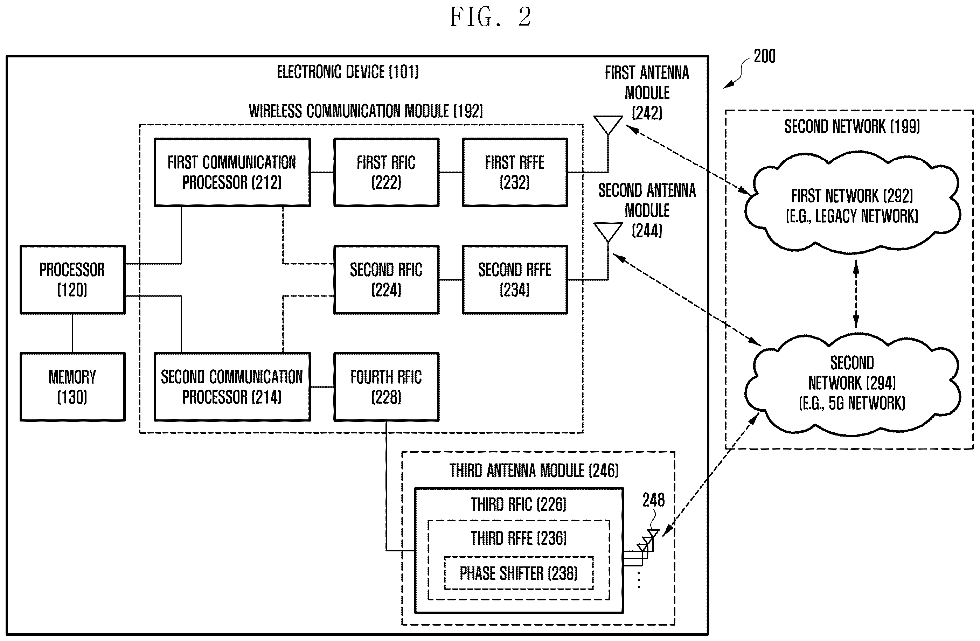

FIG. 2 is a block diagram illustrating an electronic device in a network environment including a plurality of cellular networks according to various embodiments of the disclosure.

Referring to FIG. 2, the electronic device 101 may include a first communication processor 212, second communication processor 214, first RFIC 222, second RFIC 224, third RFIC 226, fourth RFIC 228, first radio frequency front end (RFFE) 232, second RFFE 234, first antenna module 242, second antenna module 244, and antenna 248. The electronic device 101 may include a processor 120 and a memory 130. A second network 199 may include a first cellular network 292 and a second cellular network 294. According to another embodiment, the electronic device 101 may further include at least one of the components described with reference to FIG. 1, and the second network 199 may further include at least one other network. According to one embodiment, the first communication processor 212, second communication processor 214, first RFIC 222, second RFIC 224, fourth RFIC 228, first RFFE 232, and second RFFE 234 may form at least part of the wireless communication module 192. According to another embodiment, the fourth RFIC 228 may be omitted or included as part of the third RFIC 226.

The first communication processor 212 may establish a communication channel of a band to be used for wireless communication with the first cellular network 292 and support legacy network communication through the established communication channel. According to various embodiments, the first cellular network may be a legacy network including a second generation (2G), 3G, 4G, or long term evolution (LTE) network. The second communication processor 214 may establish a communication channel corresponding to a designated band (e.g., about 6 GHz to about 60 GHz) of bands to be used for wireless communication with the second cellular network 294, and support 5G network communication through the established communication channel. According to various embodiments, the second cellular network 294 may be a 5G network defined in 3GPP. Additionally, according to an embodiment, the first communication processor 212 or the second communication processor 214 may establish a communication channel corresponding to another designated band (e.g., about 6 GHz or less) of bands to be used for wireless communication with the second cellular network 294 and support 5G network communication through the established communication channel. According to one embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 to a radio frequency (RF) signal of about 700 MHz to about 3 GHz used in the first cellular network 292 (e.g., legacy network). Upon reception, an RF signal may be obtained from the first cellular network 292 (e.g., legacy network) through an antenna (e.g., the first antenna module 242) and be preprocessed through an RFFE (e.g., the first RFFE 232). The first RFIC 222 may convert the preprocessed RF signal to a baseband signal so as to be processed by the first communication processor 212.

Upon transmission, the second RFIC 224 may convert a baseband signal generated by the first communication processor 212 or the second communication processor 214 to an RF signal (hereinafter, 5G Sub6 RF signal) of a Sub6 band (e.g., 6 GHz or less) to be used in the second cellular network 294 (e.g., 5G network). Upon reception, a 5G Sub6 RF signal may be obtained from the second cellular network 294 (e.g., 5G network) through an antenna (e.g., the second antenna module 244) and be pretreated through an RFFE (e.g., the second RFFE 234). The second RFIC 224 may convert the preprocessed 5G Sub6 RF signal to a baseband signal so as to be processed by a corresponding communication processor of the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., about 6 GHz to about 60 GHz) to be used in the second cellular network 294 (e.g., 5G network). Upon reception, a 5G Above6 RF signal may be obtained from the second cellular network 294 (e.g., 5G network) through an antenna (e.g., the antenna 248) and be preprocessed through the third RFFE 236. The third RFIC 226 may convert the preprocessed 5G Above6 RF signal to a baseband signal so as to be processed by the second communication processor 214. According to one embodiment, the third RFFE 236 may be formed as part of the third RFIC 226.

According to an embodiment, the electronic device 101 may include a fourth RFIC 228 separately from the third RFIC 226 or as at least part of the third RFIC 226. In this case, the fourth RFIC 228 may convert a baseband signal generated by the second communication processor 214 to an RF signal (hereinafter, an intermediate frequency (IF) signal) of an intermediate frequency band (e.g., about 9 GHz to about 11 GHz) and transfer the IF signal to the third RFIC 226. The third RFIC 226 may convert the IF signal to a 5G Above 6RF signal. Upon reception, the 5G Above 6RF signal may be received from the second cellular network 294 (e.g., a 5G network) through an antenna (e.g., the antenna 248) and be converted to an IF signal by the third RFIC 226. The fourth RFIC 228 may convert an IF signal to a baseband signal so as to be processed by the second communication processor 214.

According to one embodiment, the first RFIC 222 and the second RFIC 224 may be implemented into at least part of a single package or a single chip. According to one embodiment, the first RFFE 232 and the second RFFE 234 may be implemented into at least part of a single package or a single chip. According to one embodiment, at least one of the first antenna module 242 or the second antenna module 244 may be omitted or may be combined with another antenna module to process RF signals of a corresponding plurality of bands.

According to one embodiment, the third RFIC 226 and the antenna 248 may be disposed at the same substrate to form a third antenna module 246. For example, the wireless communication module 192 or the processor 120 may be disposed at a first substrate (e.g., main PCB). In this case, the third RFIC 226 is disposed in a partial area (e.g., lower surface) of the first substrate and a separate second substrate (e.g., sub PCB), and the antenna 248 is disposed in another partial area (e.g., upper surface) thereof; thus, the third antenna module 246 may be formed. By disposing the third RFIC 226 and the antenna 248 in the same substrate, a length of a transmission line therebetween can be reduced. This may reduce, for example, a loss (e.g., attenuation) of a signal of a high frequency band (e.g., about 6 GHz to about 60 GHz) to be used in 5G network communication by a transmission line. Therefore, the electronic device 101 may improve a quality or speed of communication with the second cellular network 294 (e.g., 5G network).

According to one embodiment, the antenna 248 may be formed in an antenna array including a plurality of antenna elements that may be used for beamforming. In this case, the third RFIC 226 may include a plurality of phase shifters 238 corresponding to a plurality of antenna elements, for example, as part of the third RFFE 236. Upon transmission, each of the plurality of phase shifters 238 may convert a phase of a 5G Above6 RF signal to be transmitted to the outside (e.g., a base station of a 5G network) of the electronic device 101 through a corresponding antenna element. Upon reception, each of the plurality of phase shifters 238 may convert a phase of the 5G Above6 RF signal received from the outside to the same phase or substantially the same phase through a corresponding antenna element. This enables transmission or reception through beamforming between the electronic device 101 and the outside.

The second cellular network 294 (e.g., 5G network) may operate (e.g., stand-alone (SA)) independently of the first cellular network 292 (e.g., legacy network) or may be operated (e.g., non-stand alone (NSA)) in connection with the first cellular network 292. For example, the 5G network may have only an access network (e.g., 5G radio access network (RAN) or a next generation (NG) RAN and have no core network (e.g., next generation core (NGC)). In this case, after accessing to the access network of the 5G network, the electronic device 101 may access to an external network (e.g., Internet) under the control of a core network (e.g., an evolved packed core (EPC)) of the legacy network. Protocol information (e.g., LTE protocol information) for communication with a legacy network or protocol information (e.g., new radio (NR) protocol information) for communication with a 5G network may be stored in the memory 130 to be accessed by other components (e.g., the processor 120, the first communication processor 212, or the second communication processor 214).

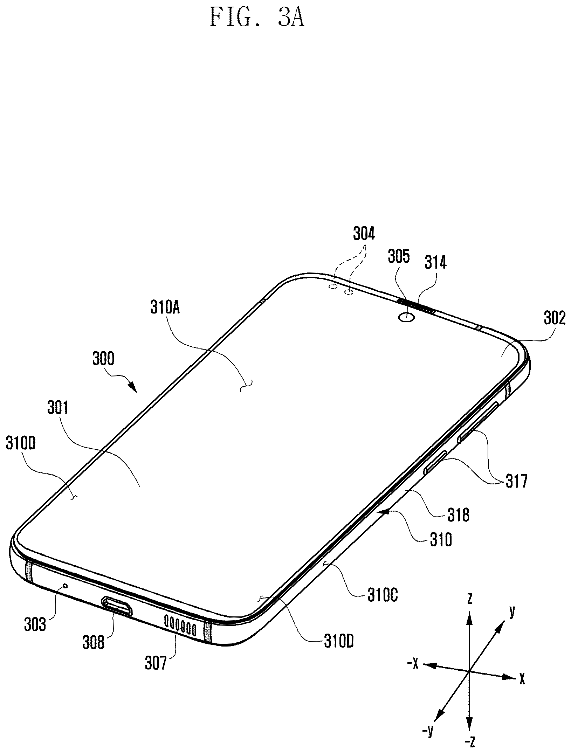

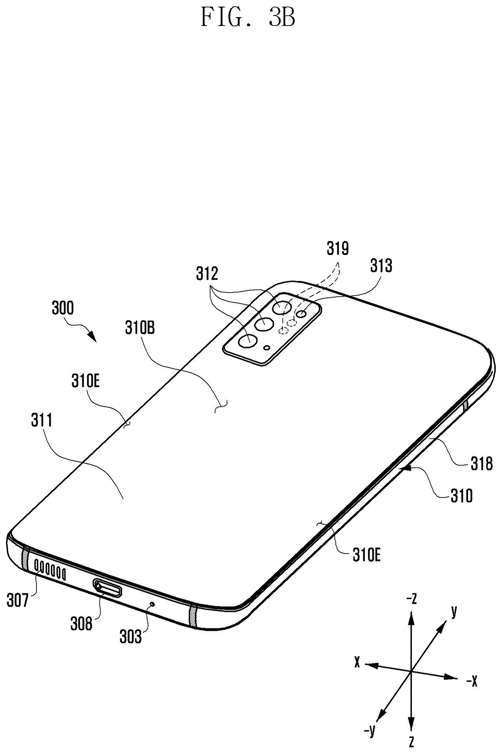

FIG. 3A is a front perspective view of an electronic device according to various embodiments of the disclosure. FIG. 3B is a rear perspective view illustrating the electronic device of FIG. 3A according to various embodiments of the disclosure.

The electronic device 300 described below may include at least one of the components of the electronic device 101 described above with reference to FIG. 1.

Referring to FIGS. 3A and 3B, the electronic device 300 according to an embodiment may include a housing 310 having a first surface (or a front surface) 310A, a second surface (or a rear surface) 310B, and a side surface 310C surrounding a space between the first surface 310A and the second surface 310B. According to an embodiment (not illustrated), the term "housing" may refer to a structure defining some of the first surface 310A, the second surface 310B, and the side surface 310C in FIG. 3A. According to an embodiment, at least a portion of the first surface 310A may be defined by a substantially transparent front surface plate 302 (e.g., a glass plate or a polymer plate with various coating layers). The second surface 310B may be provided by a substantially opaque rear surface plate 311. The rear surface plate 311 may be made of, for example, coated or colored glass, ceramic, polymer, metal (e.g., aluminum, stainless steel (STS), or magnesium), or a combination of two or more of these materials. The side surface 310C may be defined by a side surface bezel structure 318 (or a "side surface member") coupled to the front surface plate 302 and the rear surface plate 311 and including metal and/or polymer. In some embodiments, the rear surface plate 311 and the side surface bezel structure 318 may be integrally configured and may include the same material (e.g., a metal material such as aluminum).

In the illustrated embodiment, the front surface plate 302 may include, at the opposite long edges thereof, first areas 310D, which are bent from the first surface 310A toward the rear surface plate and extend seamlessly. In the illustrated embodiment (see FIG. 3B), the rear surface plate 311 may include, at the opposite long edges thereof, second areas 310E, which are bent from the second surface 310B toward the front surface plate and extend seamlessly. In some embodiments, the front surface plate 302 or the rear surface plate 311 may include only one of the first areas 310D or the second areas 310E. In some embodiments, the front surface plate 302 may not include the first areas and the second areas, and may include only a flat surface arranged in parallel to the second surface 310B. In the above-described embodiments, when viewed from a side of the electronic device, the side surface bezel structure 318 may have a first thickness (or width) on the side surfaces where the first areas 310D or the second areas 310E are not included, and may have a second thickness smaller than the first thickness, on the side surfaces where the first areas 310D or the second areas 310E are included.

According to an embodiment, the electronic device 300 may include at least one of a display 301, an input device 303, sound output devices 307 and 314, sensor modules 304 and 319, camera modules 305 and 312, key input devices 317, an indicator (not illustrated), or a connector 308. In some embodiments, in the electronic device 300, at least one of the components (e.g., the key input devices 317 or the indicator) may be omitted, or other components may be additionally included.

The display 301 may be visually exposed through a substantial portion of, for example, the front surface plate 302. According to an embodiment, at least a portion of the display 301 may be visually exposed through the front surface plate 302, which defines the first surface 310A and the first area 310D of the side surface 310C. The display 301 may be coupled to or disposed adjacent to a touch detection circuit, a pressure sensor configured to measure a touch intensity (pressure), and/or a digitizer configured to detect a magnetic field-type stylus pen. In some embodiments, at least some of the sensor modules 304 and 319 and/or at least some of the key input devices 317 may be disposed in the first areas 310D and/or the second areas 310E.

The input device 303 may include a microphone 303. In some embodiments, the input device 303 may include a plurality of microphones 303 arranged to detect the direction of sound. The sound output devices 307 and 314 may include speakers 307 and 314. The speakers 307 and 314 may include an external speaker 307 and a communication receiver 314. In some embodiments, the microphone 303, the speakers 307 and 314, and the connector 308 may be at least partially disposed in the inner space of the electronic device 300, and may be exposed to the external environment through at least one hole provided in the housing 310. In some embodiments, the hole provided in the housing 310 may be commonly used for the microphone 303 and the speakers 307 and 314. In some embodiments, the sound output devices 307 and 314 may include a speaker that operates without a hole in the housing 310 (e.g., a piezo speaker).

The sensor modules 304 and 319 may generate electrical signals or data values corresponding to an internal operating state or an external environmental state of the electronic device 300. The sensor modules 304 and 319 may include, for example, a first sensor module 304 (e.g., a proximity sensor), a second sensor module (not illustrated) (e.g., a fingerprint sensor) placed on the first surface 310A of the housing 310, and/or a third sensor module 319 (e.g., an HRM sensor) placed on the second surface 310B of the housing 310. The fingerprint sensor may be disposed on the first surface 310A of the housing 310 (e.g., a home key button), in a partial area of the second surface 310B, and/or under the display 301. The electronic device 300 may further include at least one of sensor modules (not illustrated), such as a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 305 and 312 may include a first camera module 305 disposed on the first surface 310A of the electronic device 300, a second camera module 312 disposed on the second surface 310B, and/or a flash 313. The camera modules 305 and 312 may include one or more lenses, an image sensor, and/or an image signal processor. The flash 313 may include, for example, a light-emitting diode or a xenon lamp. According to some embodiments, two or more lenses (e.g., a wide-angle lens, a super-wide-angle lens, and a telephoto lens) and image sensors may be arranged on one surface of the electronic device 300.

The key input devices 317 may be disposed on the side surface 310C of the housing 310. According to an embodiment, the electronic device 300 may not include some or all of the above-mentioned key input devices 317, and key input devices 317, which are not included, may be implemented in another form, such as soft keys, on the display 301. According to an embodiment, the key input devices 317 may be implemented using pressure sensors included in the display 301.

The indicator may be disposed, for example, on the first surface 310A of the housing 310. The indicator may provide, for example, the status information of the electronic device 300 in an optical form (e.g., a light-emitting element). According to an embodiment, the light-emitting element may provide, for example, a light source that operates in conjunction with the operation of the camera module 305. The indicator may include, for example, an LED, an IR LED, and/or a xenon lamp.

The connector hole 308 may include a first connector hole 308 capable of accommodating a connector (e.g., a universal serial bus (USB) connector) configured to transmit/receive power and/or data to/from an external electronic device, and a second connector hole (e.g., an earphone jack) (not illustrated) capable of accommodating a connector configured to transmit/receive an audio signal to/from an external electronic device.

One 305 of the camera modules 305 and 312, one 304 of the sensor modules 304 and 319, or the indicator may be disposed to be exposed through the display 301. For example, the camera modules 305, the sensor modules 304, or the indicator may be disposed in the inner space of the electronic device 300 to be in contact with the external environment through an opening perforated in the display 301 up to the front surface plate 302 or a transmission area. According to an embodiment, the area where the display 301 and the camera modules 305 face each other may be configured as a transmission area with a predetermined transmittance as a portion of a content display area. According to an embodiment, the transmission area may have a transmittance ranging from about 5% to about 20%. The transmission area may include an area overlapping with an effective area (e.g., a field of view area) of the camera module 305 through which light passes to form an image on the image sensor. For example, the transmission area of the display 301 may include an area having a lower pixel density than the periphery. For example, the transmission area may replace the opening. For example, the camera module 305 may include an under-display camera (UDC). According to an embodiment, some sensor modules 304 may be placed in the inner space of the electronic device to perform the functions thereof without being visually exposed through the front surface plate 302. For example, in this case, the area of the display 301 facing the sensor module may not require a perforated opening.

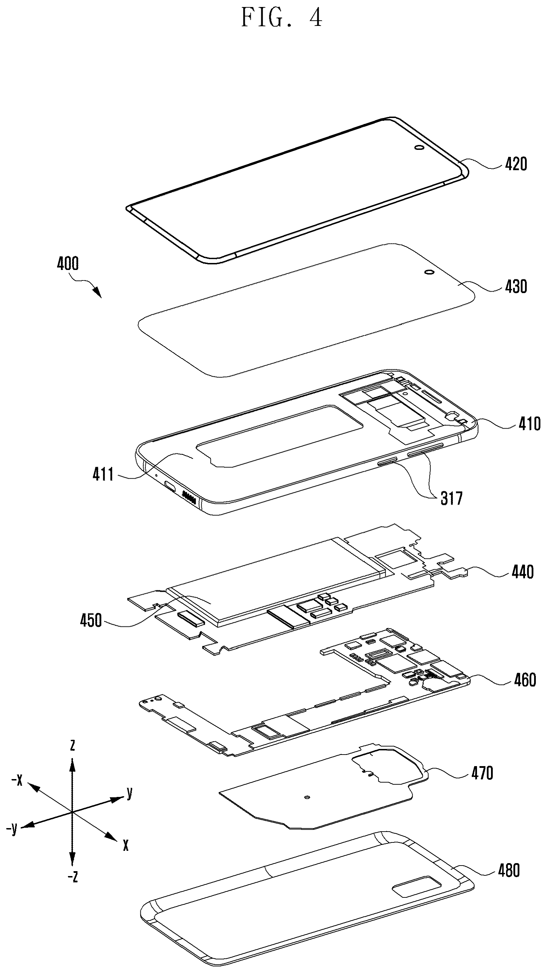

According to various embodiment, the electronic device 300 has a bar-type or plate-type exterior, but the disclosure is not limited thereto. For example, the illustrated electronic device 300 may be a portion of a foldable electronic device, a slidable electronic device, a stretchable electronic device, and/or a rollable electronic device. The term "foldable electronic device", the "slidable electronic device", the "stretchable electronic device", and/or the "rollable electronic device" may mean an electronic device in which bending transformation of a display (e.g., the display 430 in FIG. 4) is possible, so that the display can be at least partially folded, wound or rolled, at least partially expanded in area, and/or accommodated inside a housing (e.g., the housing 310 in FIGS. 3A and 3B). The foldable electronic device, the slidable electronic device, the stretchable electronic device, and/or the rollable electronic device may allow a user to use a screen display area in an expanded state by unfolding the display or exposing a greater area of the display to the outside if necessary.

FIG. 4 is an exploded perspective view of the electronic device 300 of FIG. 3A according to various embodiments of the disclosure.

The electronic device 400 of FIG. 4 may include another embodiment of an electronic device that is at least partially similar to or different from the electronic device 300 of FIGS. 3A and 3B.

Referring to FIG. 4, the electronic device 400 (e.g., the electronic device 300 in FIG. 3A or FIG. 3B) may include a side surface member 410 (e.g., a side surface bezel structure), a first support member 411 (e.g., a bracket or support structure), a front surface plate 420 (e.g., a front surface cover), a display 430 (e.g., the display 301 in FIG. 3A), a substrate 440 (e.g., a printed circuit board (PCB), a flexible PCB (FPCB), or a rigid-flexible PCB (RFPCB)), a battery 450, a second support member 460 (e.g., a rear case), an antenna 470, and a rear surface plate 480 (e.g., a rear surface cover). In some embodiments, in the electronic device 400, at least one of the components (e.g., the first support member 411 or the second support member 460) may be omitted, or other components may be additionally included. At least one of the components of the electronic device 400 may be the same as or similar to at least one of the components of the electronic device 300 of FIG. 3A or FIG. 3B, and a redundant description will be omitted below.

The first support member 411 may be disposed inside the electronic device 400, and may be connected to the side member 410 or may be integrated with the side surface member 410. The first support member 411 may be made of, for example, a metal material and/or a non-metal (e.g., polymer) material. The first support member 411 may include one surface to which the display 430 is coupled and the other surface to which the substrate 440 is coupled. A processor, memory, and/or an interface may be mounted on the substrate 440. The processor may include, for example, one or more of a central processing unit, an application processor, a graphics processing unit, an image signal processor, a sensor hub processor, or a communication processor.

The memory may include, for example, volatile memory or non-volatile memory.

The interface may include, for example, a high-definition multimedia interface (HDMI), a universal serial bus (USB) interface, an SD card interface, and/or an audio interface. The interface may electrically or physically connect, for example, the electronic device 400 to an external electronic device, and may include a USB connector, an SD card/MMC connector, or an audio connector.

The battery 450 is a device to supply power to at least one component of the electronic device 400, and may include, for example, a non-rechargeable primary battery, a rechargeable secondary battery, or a fuel cell. At least a portion of the battery 450 may be disposed to be substantially flush with, for example, the substrate 440. The battery 450 may be integrally placed inside the electronic device 400. According to an embodiment, the battery 450 may be detachably disposed on the electronic device 400.

The antenna 470 may be disposed between the rear surface plate 480 and the battery 450. The antenna 470 may include, for example, a near-field communication (NFC) antenna, a wireless charging antenna, and/or a magnetic secure transmission (MST) antenna. For example, the antenna 470 may execute short-range communication with an external device or may transmit/receive power required for charging to/from an external device in a wireless manner.

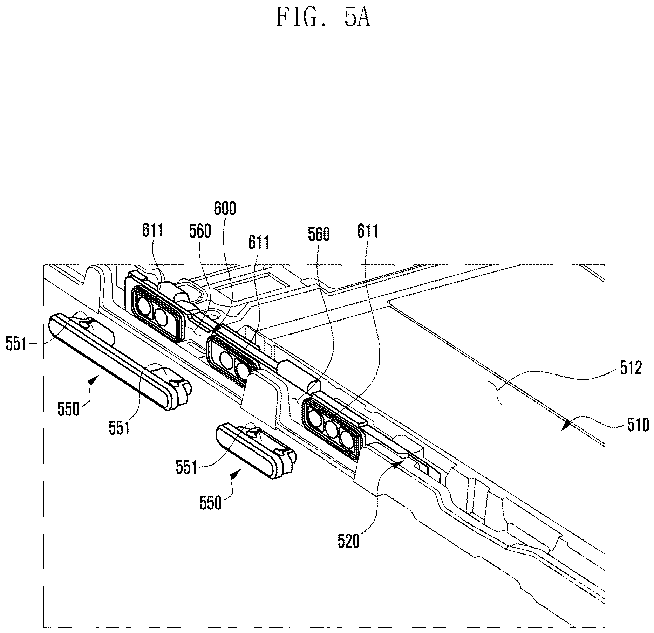

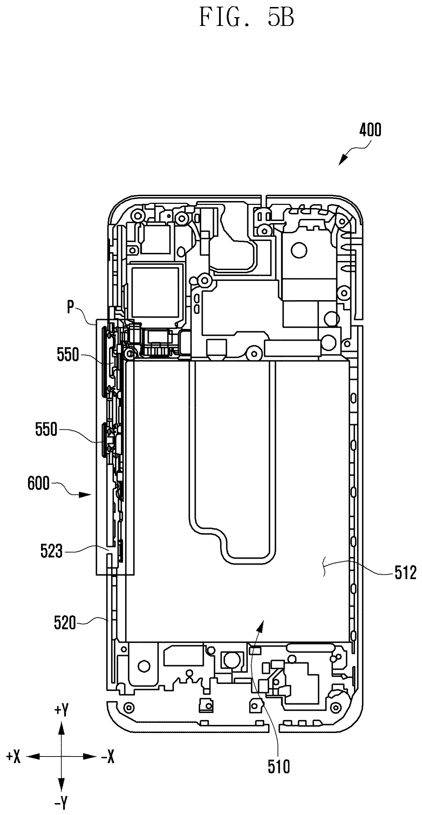

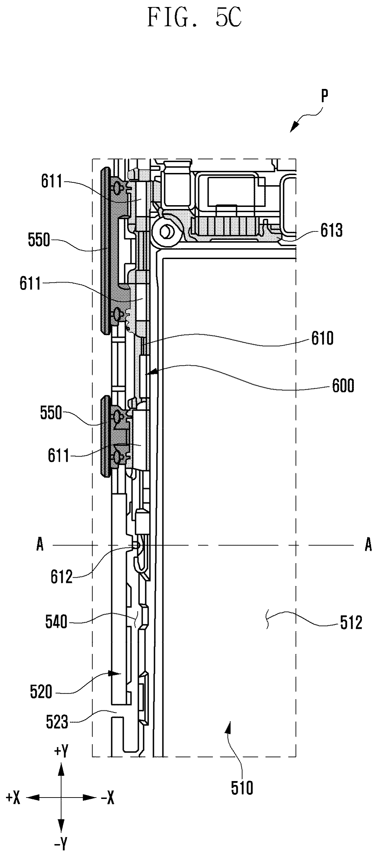

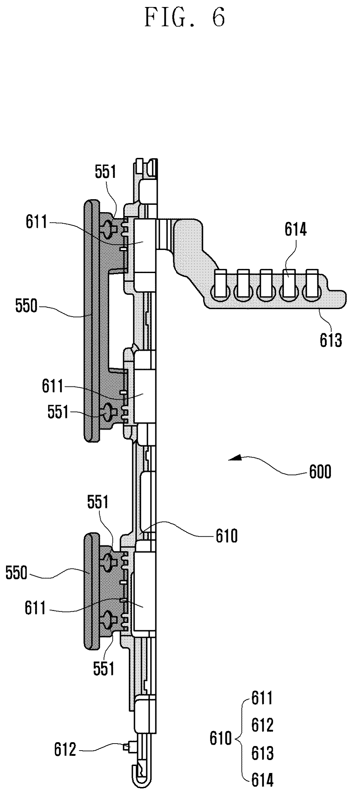

FIG. 5A is a perspective view illustrating a coupling relationship between button members and insertion holes provided in a frame according to an embodiment of the disclosure. FIGS. 5B and 5C are views illustrating a housing 510 and a frame 520 according to an embodiment of the disclosure. FIG. 6 is a front view of a key input device 600 according to an embodiment of the disclosure. In an embodiment, a key input device 600 (e.g., the key input device 317 in FIG. 3A) disposed on the side surface of the housing 510 may be a circuit member 600.

The circuit member 600 described below may transmit or receive a communication signal using various communication methods, including the communication method described with reference to FIGS. 1 and 2.

According to an embodiment, as illustrated in FIGS. 5A, 5B, and 5C, the electronic device 400 (e.g., the electronic device 101 in FIG. 1 and/or the electronic device 300 in FIG. 3A) may include a frame 520 and a housing 510 (e.g., the housing 310 in FIG. 3A). In an embodiment, the frame 520 may constitute an outer appearance of the side surface of the electronic device 400 (e.g., the side surface 310C in FIG. 3A). For example, the frame 520 may be disposed to surround the side surface of the housing 510 such that at least a portion thereof constitutes a portion of the side surface of the electronic device 400. In an embodiment, the housing 510 may be disposed inside the frame 520, and electronic components constituting the electronic device 400 may be disposed therein. In an embodiment, the frame 520 and the housing 510 may be integrated. Alternatively, the frame 520 may be fabricated separately from the housing 510 and coupled to the housing 510 through processing. According to an embodiment, the housing 510 and the frame 520 may be fabricated using various processing methods such as computer numerical control (CNC), die casting, or pressing.

According to an embodiment, the housing 510 and the frame 520 may be at least partially made of a metallic material. For example, the metal material may include titanium, an amorphous alloy, a metal-ceramic composite material (e.g., cermet), stainless steel, magnesium, a magnesium alloy, aluminum, an aluminum alloy, a zinc alloy, or a copper alloy. This is merely an example, and the frame 520 may be made of various metal materials. In addition, the housing 510 and the frame 520 may be at least partially made of a non-metallic material. For example, the non-metallic material may include synthetic resin, ceramic, or engineering plastic.

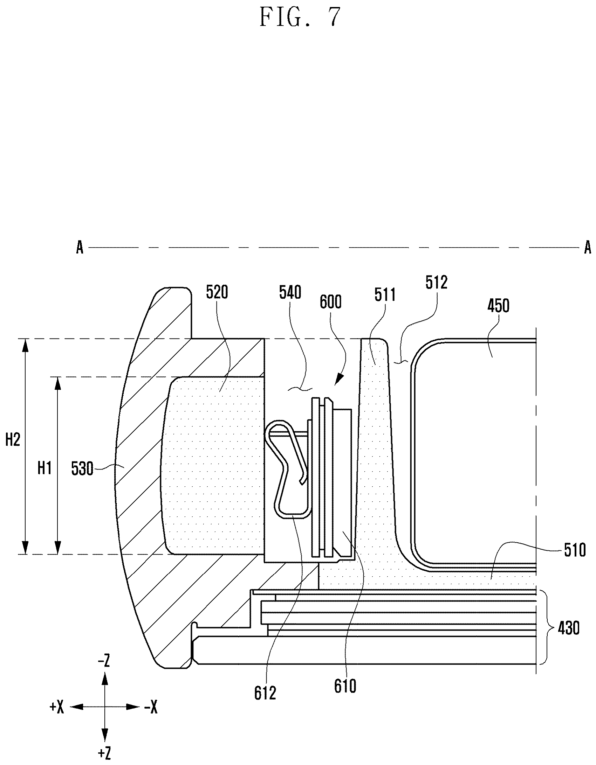

In an embodiment, referring to FIGS. 5B and 5C, the frame 520 may be made of a conductive material (e.g., a metallic material) and may be used as an antenna radiator. In an embodiment, the frame 520 may be electrically connected to a communication module (e.g., the communication module 190 in FIG. 1) connected to a printed circuit board (e.g., the substrate 440 of FIG. 4) of the electronic device 400 and may transmit or receive a communication signal (e.g., a radio frequency (RF) signal) to and from an external device. As described later, the frame 520 may be electrically connected to the communication module 190 via a circuit member 600 disposed on the side surface of the housing 510. In an embodiment, referring to FIG. 7 described later, the circuit member 600 may be disposed between the frame 520 and the housing 510 to electrically connect the printed circuit board on which the communication module 190 is disposed and the frame 520. The circuit member 600 may deliver a communication signal processed by the communication module 190 of the electronic device 400 to the frame 520 serving as an antenna or may deliver a communication signal received by the frame 520 to the communication module 190. In an embodiment, the circuit member 600 may be a key input device 600 disposed on the side surface of the housing 510.

In an embodiment, the frame 520 may transmit or receive RF signals in various frequency bands. For example, the frame 520 may be electrically connected to the communication module 190 through the key input device 600 and may transmit or receive RF signals in high-frequency bands (e.g., 3.5 GHz to 28 GHz, 28 GHz to 100 GHz (mmWave)).

In an embodiment, a side surface member 530 (e.g., the side surface member 410 in FIG. 4) made of a non-metallic material may be disposed on the side surface of the electronic device 400. For example, the side surface member 530 may be made of a synthetic resin, ceramic, engineering plastic, or polycarbonate (PC) material. The side surface member 530 may be arranged to surround the frame 520 and may constitute the outer appearance of the side surface of the electronic device 400. In an embodiment, the side surface member 530 may enclose the exterior of the frame 520 through an injection molding process. In such a case, the frame 520 may be disposed inside the side surface member 530. Accordingly, as the frame 520 is enclosed by the side surface member 530 made of a non-metallic material, contact with external liquid may be blocked or reduced.

Hereinafter, for convenience of description, it will be assumed that the circuit member 600 is a key input device. However, the circuit member 600 is not be limited to the key input device. In an embodiment, the frame 520 may be electrically connected to the communication module 190 via a coaxial cable having an impedance of 50 ohms.

According to an embodiment, as illustrated in FIGS. 5A, 5B, and 5C, a key input device 600 including switches 611 may be disposed on a side surface of the housing 510. In an embodiment, referring to FIG. 6, the key input device 600 may include a substrate 610, switches 611, a contact portion 612, and a connection member 613. The switches 611 may face insertion holes 560 provided in the frame 520. The insertion holes 560 may be provided on the side surface of the electronic device 400 to allow communication between the interior and exterior of the electronic device 400. The key input device 600 may be disposed on the side surface of the housing 510 so that the switches 611 face the insertion holes 560.

In an embodiment, referring to FIG. 5A, the electronic device 400 may include button members 550. The button members 550 may be inserted into the insertion holes 560 of the frame 520 and may face the switches 611es of the key input device 600 disposed on the side surface of the housing 510. The button members 550 may each include an actuator 551 for pressing a corresponding one of the switches 611. As a user pushes the button members 550, the actuators 551 may press the switches 611. The switches 611 may be pressed by the actuators 551 to generate an electrical signal. A processor may control various functions of the electronic device 400 based on the electrical signal generated by the key input device 600. For example, the processor may control the power of the electronic device 400 or adjust the speaker volume based on the electrical signal generated by the switches 611.

In an embodiment, the contact portion 612 may be disposed on the substrate 610 of the key input device 600 and configured to be in contact with the frame 520. The contact portion 612 may be made of a conductive material and may transmit an electrical signal generated by the communication module 190 to the frame 520. As described later, an opening 540 may be defined between the housing 510 and the frame 520. The contact portion 612 of the key input device 600 may be positioned in the opening 540. The contact portion 612 may be in contact with the frame 520 at the center of the frame 520 in the thickness direction (e.g., the Z-axis direction with reference to FIG. 7).

In an embodiment, the contact portion 612 may be made of a flexible material. In an embodiment, the contact portion 612 may include a conductive clip (e.g., a conductive member including an elastic structure). In an embodiment, the contact portion 612 may be implemented in various forms not limited to the illustrated example. For example, the contact portion may be implemented with a pogo pin, a spring, a conductive foam, a conductive rubber, a conductive tape, or a conductive connector.

In an embodiment, the connection member 613 may extend from the substrate 610 of the key input device 600 and may be electrically connected to a printed circuit board on which the communication module 190 is disposed. In an embodiment, the connection member 613 may be a flexible printed circuit board (FPCB) extending from the key input device 600. The connection member 613 may include a printed circuit board and a connection portion 614. The connection portion 614 may be electrically connected to the printed circuit board using an electrical connection method such as soldering, clipping, socketing, bolting, and/or bonding. Accordingly, by being connected to the communication module 190 through the key input device 600, the frame 520 of the disclosure may perform an antenna function for transmitting or receiving a communication signal.

In an embodiment, the connection member 613 may be an antenna integrated circuit (IC). In an embodiment, the connection member 613 may include a plurality of integrated circuits. For example, the connection member 613 may include various antenna-related circuits, such as a matching circuit for impedance matching and a switching circuit configured to allow an antenna to correspond to a broadband characteristic. In an embodiment, the matching circuit may be a circuit that matches impedances, including elements such as an inductor or a capacitor. In an embodiment, the switching circuit may increase the physical length of an antenna radiator (e.g., the frame 520) by shorting antenna radiators that are electrically open to each other. The matching circuit and switching circuit of the connection member 613 described above should not be construed as being limited by their names but should be understood as circuits that include elements capable of performing the corresponding functions. For example, the switching circuit may be referred to as a switching circuit part, and the matching circuit may be referred to as a variable element part. In an embodiment, among the antenna-related circuits, the matching circuit or switching circuit may be partially omitted.

In an embodiment, the connection member 613 may be integrated with the key input device 600. In some embodiments, the connection member 613 may be fabricated separately from the key input device 600 and coupled to the key input device 600.

In an embodiment, the key input device 600 may include a flexible printed circuit board radio frequency cable (FRC). The key input device 600 may be made of a flexible material and may include multiple conductive lines. In an embodiment, the conductive lines may include, for example, a signal line for transmitting communication signals, a power line for transmitting power to drive a circuit, a ground line connected to the ground, and a volume control line used for adjusting volume. In an embodiment, the conductive lines of the key input device 600 may extend to the connection portion 614. The conductive lines may allow the key input device 600 to be electrically connected to a printed circuit board via the connection portion 614.

In an embodiment, the key input device 600 may include a structure in which multiple layers are laminated. In some embodiments, a ground vertical interconnect access (VIA) may be disposed around the conductive lines. Here, the ground VIA may electrically connect, in a stacking direction, grounds disposed in different layers in the key input device 600 in which the multiple layers are laminated. For example, a ground disposed on the same layer as a conductive line may be disposed around a conductive lines, and a ground disposed on a different layer from the conductive line may be disposed at a position overlapping the conductive line. Grounds arranged on different layers may be interconnected by using a VIA. The ground VIA structure may be configured to reduce a phenomenon in which noise is added to a communication signal transmitted via a conductive line by blocking electromagnetic waves generated by another electrical object.

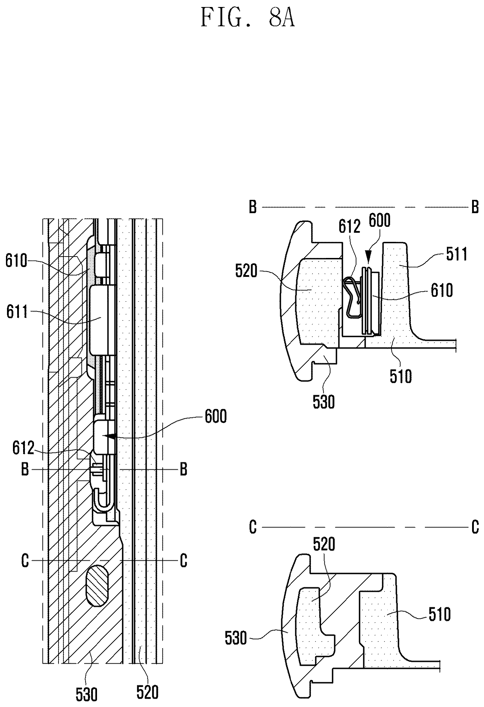

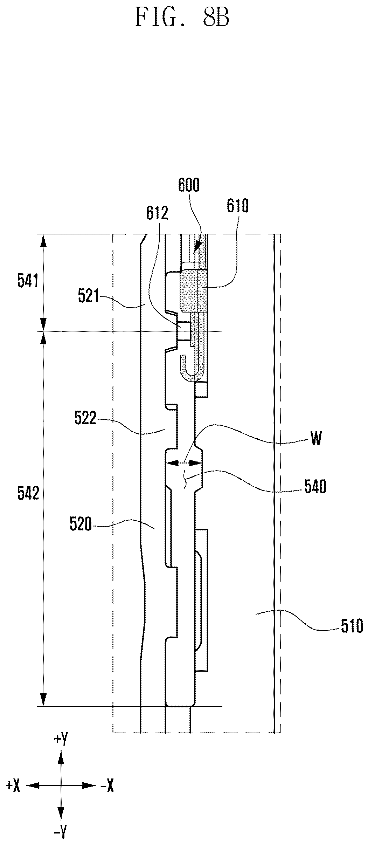

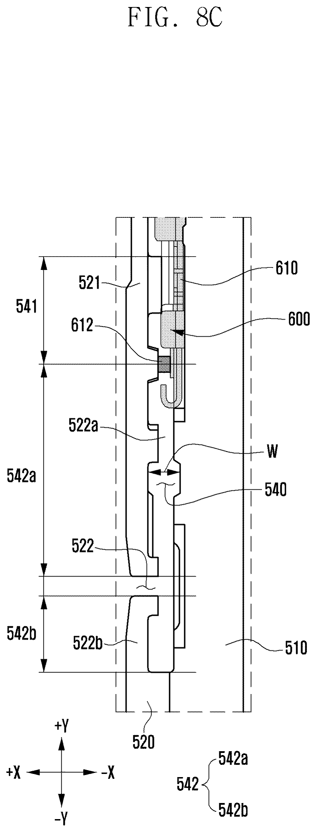

FIG. 7 is a cross-sectional view taken along line A-A illustrated in FIG. 5C. FIG. 8A is a view illustrating a state in which a contact portion of a key input device is in contact with the frame in a state in which the frame and the side surface member are coupled, according to an embodiment of the disclosure. FIG. 8B is a view illustrating a first section and a second section of an opening defined between the frame and the housing, according to an embodiment of the disclosure. FIG. 8C is a view illustrating a first section, a (2-1)^{th} section, and a (2-2)^{th} section of the opening defined between the frame and the housing, according to an embodiment of the disclosure.

According to an embodiment, as illustrated in FIG. 7 and FIGS. 8A to 8C, an opening 540 may be defined between the frame 520 and the housing 510 (e.g., the housing 310 in FIG. 3A). In an embodiment, the opening 540 may be provided through separate processing in a state in which the frame 520 and the housing 510 are coupled. For example, the opening 540 may be provided in a shape opened in the -Z direction with reference to FIG. 7. In an embodiment, the opening 540 may extend in the Y-axis direction of FIG. 8A between the frame 520 and the housing 510. In an embodiment, at least a portion of the key input device 600 may be positioned in the opening 540. In an embodiment, the opening 540 may be configured such that a section of the frame 520 (e.g., the second portion 522 or the (2-1)^{th} portion 522a) functions as an antenna radiator.

According to an embodiment, as illustrated in FIG. 7, the housing 510 may include a battery seating portion 512 in which a battery 450 (e.g., the battery 189 in FIG. 1) is seated and a partition wall 511 partitioning the opening 540. The key input device 600 may be disposed on the partition wall 511 to face the frame 520.

According to an embodiment, the width W of the opening 540 (e.g., the length in the X-axis direction with reference to FIG. 7 and/or the width W of the opening 540 in FIG. 8B) may be determined in consideration of the volume of the battery seating portion 512. In an embodiment, as the width W of the opening 540 decreases, the volume of the battery seating portion 512 may increase in the X-axis direction with reference to FIG. 7. As the volume of the battery seating portion 512 increases, the capacity of the battery 450 may increase. Accordingly, the battery 450 performance of the electronic device 400 (e.g., the electronic device 101 in FIG. 1 and/or the electronic device 300 in FIG. 3A) may be improved.

According to an embodiment, as illustrated in FIGS. 8B and 8C, a portion of the key input device 600 may be positioned in the opening 540 located between the frame 520 and the housing 510. The contact portion 612 of the key input device 600 may be in contact with a portion of the frame 520 corresponding to the opening 540. Referring to FIGS. 8B and 8C, for example, the contact portion 612 may be in contact with the frame 520 at the center of the frame 520 in the thickness direction (e.g., the Z-axis direction with reference to FIG. 7). In this case, the stability of the electrical connection between the contact portion 612 and the frame 520 may be increased.

In an embodiment, the frame 520 may be used as an antenna radiator for transmitting or receiving at least one predetermined frequency band (e.g., LB (about 600 MHz to about 1 GHz), MB (about 1 GHz to about 2.3 GHz), HB (about 2.3 GHz to about 2.7 GHz), or UHB (about 2.7 GHz to about 6 GHz)) through the contact portion 612 of the key input device 600.

In an embodiment, a metallic material disposed around the frame 520 may interfere with the communication performance of the frame 520. For example, a metallic material positioned inside the frame 520 (e.g., the partition wall 511 and/or a portion of the frame 520) may degrade the communication performance of the frame 520. In an embodiment, the opening 540 may be configured to use a portion of the frame 520 as an antenna radiator. For example, as the opening 540 is positioned between the housing 510 and the frame 520, a metallic material may not be disposed inside the frame 520. Accordingly, the frame 520 may ensure communication performance in a predetermined frequency band through the opening 540 in a certain section.

In an embodiment, the partition wall 511 may be made of a metallic material, similar to the frame 520. The opening 540 may have a width W such that the partition wall 511 does not interfere with the antenna performance of the frame 520. In an embodiment, the width W of the opening 540 may range from about 1 mm to about 3 mm. For example, with reference to FIG. 7, the gap between the frame 520 and the partition wall 511 may be about 2.1 mm. In an embodiment, referring to FIGS. 8A and 8B, the width W of the opening 540 may vary according to sections in the Y-axis direction. The partition wall 511 may be spaced apart from the frame 520 by a predetermined distance so as not to interfere with the antenna performance of the frame 520 and may be higher than the frame 520. In an embodiment, referring to FIG. 7, the partition wall 511 may have a second height H2 (e.g., the length in the Z-axis direction with reference to FIG. 7) greater than a first height H1 (e.g., the length in the Z-axis direction with reference to FIG. 7) of the frame 520. Accordingly, the partition wall 511 may ensure a certain level of rigidity and protect the battery 450 from an external impact.

According to an embodiment, as illustrated in FIGS. 8B and 8C, the opening 540 may be partitioned into a first section 541 positioned in a first direction (e.g., the +Y direction of FIG. 8B) with respect to the contact portion 612 of the key input device 600 and a second section 542 positioned in a second direction opposite to the first direction (e.g., the -Y direction of FIG. 8B).

In an embodiment, referring to FIG. 8B, the frame 520 may include a first portion 521 corresponding to the first section 541 of the opening 540 and a second portion 522 corresponding to the second section 542 of the opening 540. In an embodiment, the second portion 522 of the frame 520 may be a section that determines the frequency of the antenna. In an embodiment, the frame 520 may transmit or receive a specific frequency band through the second portion 522. For example, the second portion 522 of the frame 520 may be an antenna radiator that radiates a communication signal transmitted from the communication module 190 through the contact portion 612.

In an embodiment, referring to FIG. 8B, the length of the second portion 522 of the frame 520 (e.g., the length in the Y-axis direction with reference to FIG. 8B) may be determined in consideration of the antenna frequency band. In an embodiment, the antenna resonance frequency may be determined depending on the physical length of the second portion 522 of the frame 520. For example, the length of the second portion 522 of the frame 520 (e.g., the length in the Y-axis direction with reference to FIG. 8B) may be greater than the length of the first portion 521 (e.g., the length in the Y-axis direction with reference to FIG. 8B). Alternatively, the length of the second portion 522 of the frame 520 may be smaller than the length of the first portion 521. Accordingly, by adjusting the physical length of the second portion 522 of the frame 520, communication signals may be transmitted or received in various frequency bands.

In an embodiment, referring to FIG. 8B, the length of the second section 542 of the opening 540 (e.g., the length in the Y-axis direction with reference to FIG. 8B) may be determined to correspond to the length of the second portion 522 of the frame 520. In an embodiment, the second portion 522 of the frame 520 may be spaced apart from a metallic material (e.g., the partition wall 511) through the second section 542 of the opening 540, thereby enabling communication in a predetermined frequency band.

In an embodiment, referring to FIG. 8B, the width W of the second section 542 of the opening 540 may be determined within a range that prevents the partition wall 511 from affecting communication through the second portion 522 of the frame 520. Accordingly, the electronic device 400 may communicate with an external electronic device in a predetermined frequency band through the second portion 522 of the frame 520.

In an embodiment, referring to FIG. 8B, the first section 541 of the opening 540 may complement the antenna performance of the second portion 522 of the frame 520. As described above, a metallic material positioned around the second portion 522 of the frame 520 may degrade the antenna performance of the second portion 522 of the frame 520. For example, since the first portion 521 of the frame 520 is a metallic material adjacent to the second portion 522 of the frame 520, it may degrade the antenna performance of the second portion 522 of the frame 520. In this case, by reducing the contact area between the second portion 522 and the first portion 521 of the frame 520, the influence of the first portion 521 of the frame 520 on the antenna performance of the second portion 522 of the frame 520 may be reduced. For example, the second portion 522 of the frame 520 may have a reduced contact area with the first portion 521 of the frame 520 through the first section 541 of the opening 540, enabling transmission or reception of a communication signal in a designated frequency band.

According to an embodiment, as illustrated in FIG. 8C, the resonance frequency of the frame 520 may be adjusted by providing a segmentation portion 523 in the second portion 522 of the frame 520. In an embodiment, the frame 520 may be segmented into multiple portions by the segmentation portion 523. In an embodiment, the segmentation portion 523 may be a space provided in the frame 520 to allow a single frame 520 to be segmented into multiple portions. In an embodiment, the insulating member may be made of a material with low conductivity or low dielectric constant. In an embodiment, referring to FIG. 8A, the insulating member disposed in the segmentation portion 523 may be the side surface member 530 enclosing the frame 520. For example, as the side surface member 530 is injection-molded to enclose the frame 520, the side surface member 530 may be disposed in the segmentation portion 523.

In an embodiment, referring to FIG. 8C, the second section 542 of the opening 540 may include a (2-1)^{th} section 542a positioned in a first direction with respect to the segmentation portion 523 and a (2-2)^{th} section 542b positioned in a second direction with respect to the segmentation portion 523. In addition, the second portion 522 of the frame 520 may include a (2-1)^{th} portion 522a corresponding to the (2-1)^{th} section 542a of the opening 540 and a (2-2)^{th} portion 522b corresponding to the (2-2)^{th} section 542b of the opening 540.

In an embodiment, referring to FIG. 8C, the (2-1)^{th} portion 522a and the (2-2)^{th} portion 522b of the frame 520 may be electrically segmented through the insulating member disposed in the segmentation portion 523. A communication signal delivered from the contact portion 612 to the second portion 522 of the frame 520 may not be transmitted to the (2-2)^{th} portion 522b of the frame 520 due to the segmentation portion 523. Accordingly, the frame 520 may transmit or receive a communication signal in a predetermined band through the (2-1)^{th} portion 522a. In this manner, the electrical length and resonance frequency of the frame 520 may be adjusted through the segmentation portion 523. By adjusting the length of the section of the frame 520 that serves as an antenna (e.g., the length of the (2-1)^{th} portion 522a of the frame 520), communication (e.g., short-range communication and long-range communication) may be enabled at various frequencies.

In an embodiment, referring to FIG. 8C, the length of the (2-1)^{th} portion 522a of the frame 520 (e.g., the length in the Y-axis direction with reference to FIG. 8C) may be determined in consideration of the antenna frequency band. For example, the length of the (2-1)^{th} portion 522a of the frame 520 may be adjusted by adjusting the position of the segmentation portion. Accordingly, the frame 520 may transmit or receive a communication signal in various frequency bands.

In an embodiment, referring to FIG. 8C, the length of the (2-1)^{th} section 542a of the opening 540 (e.g., the length in the Y-axis direction with reference to FIG. 8C) may be determined to correspond to the length of the (2-1)^{th} portion 522a of the frame 520. In an embodiment, the (2-1)^{th} portion 522a of the frame 520 may be spaced apart from a metallic material (e.g., the partition wall 511) through the (2-1)^{th} section 542a of the opening 540, enabling communication in a predetermined frequency band.

In an embodiment, referring to FIG. 8C, the width W of the (2-1)^{th} section 542a of the opening 540 may be determined within a range that prevents the partition wall 511 from affecting communication through the (2-1)^{th} portion 522a of the frame 520. Accordingly, the electronic device 400 may communicate with an external electronic device in a predetermined frequency band through the (2-1)^{th} portion 522a of the frame 520.

In an embodiment, the first section 541 of the opening 540 and the (2-2)^{th} section 542b of the opening 540 may complement the antenna performance of the (2-1)^{th} portion 522a of the frame 520. The metallic material positioned around the (2-1)^{th} portion 522a of the frame 520 may degrade the antenna performance of the (2-1)^{th} portion 522a of the frame 520. For example, the first portion 521 and the (2-2)^{th} portion 522b of the frame 520, which are metallic materials adjacent to the (2-1)^{th} portion 522a of the frame 520, may degrade the antenna performance of the (2-1)^{th} portion 522a of the frame 520. In this case, by reducing the contact areas the first portion 521 and (2-2)^{th} portion 522b of the frame 520 relative to the (2-1)^{th} portion 522a, the influence of the first portion 521 and the (2-2)^{th} portion 522b of the frame 520 on the antenna performance of the (2-1)^{th} portion 522a of the frame 520 may be reduced. For example, the contact area between the (2-1)^{th} portion 522a and the first portion 521 of the frame 520 may be reduced through the first section 541 of the opening 540, which corresponds to the first portion 521 of the frame 520. In addition, the contact area between the (2-1)^{th} portion 522a and the (2-2)^{th} portion 522b of the frame 520 may be reduced through the (2-2)^{th} section 542b of the opening 540, which corresponds to the (2-2)^{th} portion 522b of the frame 520. Accordingly, the (2-1)^{th} portion 522a of the frame 520 is reduced in the contact area with the (2-2)^{th} portion 522b of the frame 520 through the first section 541 and the (2-2)^{th} section 542b of the opening 540, and may transmit or receive a communication signal in a predetermined frequency band.

The above description assumes that there the key input device 600 has a single contact portion, but the disclosure may not be limited thereto. In an embodiment, the number of contact portions 612 of the key input device 600 may be determined depending on the number of antenna radiation sections of the frame 520. For example, when the (2-2)^{th} portion 522b of the frame 520 illustrated in FIG. 8C is used as an antenna radiator, the key input device 600 may include an additional contact portion (not illustrated) that comes into contact with the (2-2)^{th} portion 522b of the frame 520. The (2-2)^{th} portion 522b of the frame 520 may be electrically connected to the communication module 190 through the additional contact portion to be used as an antenna radiator. In this case, the length of the (2-2)^{th} portion 522b of the frame 520 (e.g., the length in the Y-axis direction with reference to FIG. 8C), the length of the (2-2)^{th} section 542b of the opening 540 corresponding to the (2-2)^{th} portion 522b of the frame 520 (e.g., the length in the Y-axis direction with reference to FIG. 8C), and the width W of the (2-2)^{th} section 542b of the opening 540 may be determined in consideration of the frequency band to be radiated by the (2-2)^{th} portion 522b of the frame 520.

According to an embodiment of the disclosure, an electronic device 400 (e.g., the electronic device 101 in FIG. 1 and/or the electronic device 300 in FIG. 3A) may include a housing 510 (e.g., the housing 310 in FIG. 3A), a frame 520 at least partially made of a conductive material, surrounding a side surface of the housing, and including an insertion hole 560, a circuit member 600 (e.g., the key input device 317 of FIG. 3A) including a substrate 610, a connection member 613 extending from the substrate and connected to a communication module 190 of the electronic device, and a switch 611 disposed in the housing and facing the insertion hole of the frame, a contact portion 612 made of a conductive material and disposed on the substrate of the circuit member and in contact with the frame, and an opening 540 positioned between the housing and the frame and including a first section 541 positioned in a first direction (e.g., the +Y direction with reference to FIG. 8B) with respect to the contact portion, and a second section 542 positioned in a second direction opposite to the first direction (e.g., the -Y direction with reference to FIG. 8B) with respect to the contact portion. The frame may include a first portion 521 corresponding to the first section of the opening, and a second portion 522 corresponding to the second section of the opening and configured to transmit or receive a communication signal.

In addition, the length of the second section of the opening may be greater than the length of the first section of the opening.

The frame may further include a segmentation portion 523 provided in the second portion of the frame.

The second section of the opening may include a (2-1)^{th} section 542a positioned in the first direction with respect to the segmentation portion, and a (2-2)^{th} section 542b positioned in the second direction with respect to the segmentation portion. The second portion of the frame may include a (2-1)^{th} portion 522a corresponding to the (2-1)^{th} section and a (2-2)^{th} portion 522b corresponding to the (2-2)^{th} section.

The length of the (2-1)^{th} section of the opening may be greater than the length of the (2-2)^{th} section of the opening.

The circuit member may include an additional contact portion made of a conductive material and in contact with the (2-2)^{th} portion of the frame.

The housing may include a battery seating portion 512 positioned in an inner space of the housing, and a partition wall 511 partitioning the opening. The circuit member may be seated on the partition wall.

In addition, a second height H2 of the partition wall may be greater than a first height H1 of the frame.

The opening may have a width W ranging from 1 mm to 3 mm.

The contact portion may be in contact with the frame at a center point of the width of the frame in a third direction perpendicular to the first direction and the second direction.

The circuit member may be a key input device 600 (e.g., the key input device 317 in FIG. 3A).

The electronic device may include a button member 550 at least partially constituting the outer appearance of the electronic device and inserted into the insertion hole.

The frame and the housing may be integrated.

An embodiment of the disclosure provides a circuit member 600 (e.g., the key input device 317 in FIG. 3A) disposed in an opening 540 defined between a housing 510 (the housing 310 in FIG. 3A) and a frame 520, which is at least partially made of a conductive material, surrounds a side surface of the housing, and includes an insertion hole 560. The circuit member may include a substrate 610, a connection member 613 extending from the substrate and connected to a communication module 190 of the electronic device, a switch 611 disposed in the housing and facing the insertion hole of the frame, and a contact portion 612 made of a conductive material and disposed on the substrate of the circuit member and in contact with the frame. The opening may include a first section 541 positioned in a first direction (e.g., the +Y direction with reference to FIG. 8B) with respect to the contact portion, and a second section 542 positioned in a second direction opposite to the first direction (e.g., the -Y direction with reference to FIG. 8B) with respect to the contact portion. The frame may include a first portion 521 corresponding to the first section of the opening, and a second portion 522 corresponding to the second section of the opening and configured to transmit or receive a communication signal.

In addition, the length of the second section of the opening may be greater than the length of the first section of the opening.

The frame may further include a segmentation portion 523 provided in the second portion of the frame.

The second section of the opening may include a (2-1)^{th} section 542a positioned in the first direction with respect to the segmentation portion, and a (2-2)^{th} section 542b positioned in the second direction with respect to the segmentation portion. The second portion of the frame may include a (2-1)^{th} portion 522a corresponding to the (2-1)^{th} section and a (2-2)^{th} portion 522b corresponding to the (2-2)^{th} section.

The length of the (2-1)^{th} section of the opening may be greater than the length of the (2-2)^{th} section of the opening.

The circuit member may include an additional contact portion made of a conductive material and in contact with the (2-2)^{th} portion of the frame.

The housing may include a battery seating portion 512 positioned in an inner space of the housing and a partition wall 511 partitioning the opening. A second height H2 of the partition wall may be greater than a first height H1 of the frame.

## Claims

1. An electronic device (101, 300, 400) comprising:
a housing (310, 510);
a frame (520) at least partially made of a conductive material, surrounding a side surface of the housing, and comprising an insertion hole (560);
a circuit member (317, 600) comprising a substrate (610), a connection member (613) extending from the substrate and connected to a communication module (190) of the electronic device, and a switch (611) disposed in the housing and facing the insertion hole of the frame;
a contact portion (612) made of a conductive material and disposed on the substrate of the circuit member and in contact with the frame; and
an opening (540) positioned between the housing and the frame and comprising a first section (541) positioned in a first direction with respect to the contact portion, and a second section (542) positioned in a second direction opposite to the first direction with respect to the contact portion,
wherein the frame comprises a first portion (521) corresponding to a first section of the opening, and a second portion (522) corresponding to the second section of the opening and configured to transmit or receive a communication signal.

2. The electronic device of claim 1, wherein a length of the second section of the opening is greater than a length of the first section of the opening.

3. The electronic device of claim 1, further comprising
a segmentation portion (523) provided in the second portion of the frame.

4. The electronic device of claim 3, wherein the second section of the opening comprises a (2-1)^{th} section (542a) positioned in the first direction with respect to the segmentation portion, and a (2-2)^{th} section (542b) positioned in the second direction with respect to the segmentation portion, and
wherein the second portion of the frame comprises a (2-1)^{th} portion (522a) corresponding to the (2-1)^{th} section, and a (2-2)^{th} portion (522b) corresponding to the (2-2)^{th} section.

5. The electronic device of claim 4, wherein a length of the (2-1)^{th} section of the opening is greater than a length of the (2-2)^{th} section of the opening.

6. The electronic device of claim 4, wherein the circuit member comprises an additional contact portion made of a conductive material and in contact with the (2-2)^{th} portion of the frame.

7. The electronic device of claim 1, wherein the housing comprises a battery seating portion (512) positioned in an inner space of the housing, and a partition wall (511) partitioning the opening, and
wherein the circuit member is seated on the partition wall.

8. The electronic device of claim 7, wherein a second height (H2) of the partition wall is greater than a first height (H1) of the frame.

9. The electronic device of claim 1, wherein the opening has a width (W) ranging from 1 mm to 3 mm.

10. The electronic device of claim 1, wherein the contact portion is in contact with the frame at a center point of a width of the frame in a third direction perpendicular to the first direction and the second direction.

11. The electronic device of claim 1, wherein the circuit member is a key input device (317, 600).

12. The electronic device of claim 1, further comprising
a button member (550) at least partially constituting an outer appearance of the electronic device and inserted into the insertion hole.

13. The electronic device of claim 1, wherein the frame and the housing are integrated.

14. A circuit member disposed in an opening (540) defined between a housing (310, 510) and a frame (520), in which the frame is at least partially made of a conductive material, surrounds a side surface of the housing, and comprises an insertion hole (560), the circuit member comprising:
a substrate (610);
a connection member (613) extending from the substrate and connected to a communication module (190) of the electronic device;
a switch (611) disposed in the housing and facing the insertion hole of the frame; and
a contact portion (612) made of a conductive material and disposed on the substrate of the circuit member and in contact with the frame,
wherein the opening comprises a first section (541) positioned in a first direction with respect to the contact portion, and a second section (542) positioned in a second direction opposite to the first direction with respect to the contact portion, the second section having a length greater than a length of the first section, and
wherein the frame comprises a first portion (521) corresponding to a first section of the opening, and a second portion (522) corresponding to the second section of the opening and configured to transmit or receive a communication signal.

15. The circuit member of claim 14, further comprising
a segmentation portion (523) provided in the second portion of the frame,
wherein the second section of the opening comprises a (2-1)^{th} section (542a) positioned in the first direction with respect to the segmentation portion, and a (2-2)^{th} section (542b) positioned in the second direction with respect to the segmentation portion, and
wherein the second portion of the frame comprises a (2-1)^{th} portion (522a) corresponding to the (2-1)^{th} section, and a (2-2)^{th} portion (522b) corresponding to the (2-2)^{th} section.
